# EUROPÄISCHE PATENTSCHRIFT

(11) **EP 0 633 557 B1**
(45) Veröffentlichungstag und Bekanntmachung des Hinweises auf die Patenterteilung: **20.08.1997**
(21) Anmeldenummer: 94108773.6
(22) Anmeldetag: 08.06.1994
(51) Int. Cl.: G09F 7/18, B60R 13/10

(54) **Vorrichtung zur Halterung von Schildern**
Device for holding signs
Dispositif de fixation des enseignes

(30) Priorität: 08.07.1993 DE 9310156 U
(43) Veröffentlichungstag der Anmeldung: 11.01.1995
(73) Patentinhaber: Adolf Würth GmbH & Co. KG, D-74653 Künzelsau (DE)
(72) Erfinder: Humm, Siegfried, D-74214 Schöntal-Westernhausen (DE)
(74) Vertreter: Patentanwälte Ruff, Beier, Schöndorf und Mütschele

(56) Entgegenhaltungen:
- DE-A- 3 821 762
- DE-U- 8 910 590
- DE-U- 9 111 675

## Beschreibung

Die Erfindung betrifft eine Vorrichtung zur Halterung von Schildern, insbesondere Typenschildern und Nummernschildern, an einem Gegenstand, insbesondere einem Kraftfahrzeug.

Vorrichtungen dieser Art werden auch Kennzeichen-Schnellbefestigungen genannt.

Es gibt eine Vielzahl von derartigen Vorrichtungen, die üblicherweise aus Kunststoff oder auch aus Metall bestehen. Normalerweise sind sie so ausgebildet, daß das Schild von der Längsseite oder einer Stirnseite der Halterung in diese eingeschoben wird. Anschließend erfolgt eine Festlegung mittels eines das Schild im Randbereich übergreifenden Profils.

Ein Beispiel für eine derartige Nummernschildbefestigung ist das Gebrauchsmuster DE-U-87 16 019.

Die bekannten Halterungen sind üblicherweise mehrteilig, mindestens aus zwei Teilen bestehend, aufgebaut.

Es ist bereits eine verschließbare Halterung für Kraftfahrzeugkennzeichen bekannt (DE-A1-24 35 961), die aus einer an einem Kraftfahrzeug anschraubbaren Platte und einem an der Platte über ein Scharnier angelenkten Rahmen aufgebaut ist. Der Rahmen wird zum Verschließen der Halterung an der Platte angeschraubt.

Weiterhin bekannt ist eine Vorrichtung zur Befestigung einer Tafel an einer Unterlage (AT-B-380 842), die aus einer Unterlagsplatte und einem an dieser über ein Filmscharnier angelenkten Rahmen besteht. Zum Verschließen wird der Rahmen zugeklappt und greift mit einem mit einem Widerhaken versehenen Zapfen in ein Langloch ein. Zum Öffnen muß ein Werkzeug verwendet werden, das nur von der Rückseite der Unterlagsplatte her eingeführt werden kann.

Der Erfindung liegt die Aufgabe zugrunde, eine Vorrichtung der eingangs genannten Art zu schaffen, die auch unter beengten räumlichen Bedingungen, wie sie bei modernen Kraftfahrzeugen auftreten können, ohne Schwierigkeiten verwendet werden kann.

Zur Lösung dieser Aufgabe schlägt die Erfindung eine Vorrichtung mit den Merkmalen des Anspruchs 1 vor. Weiterbildungen sind Gegenstand der Unteransprüche.

Das Rahmenelement, das insbesondere den Randbereich des zu befestigenden Schildes abdeckt, macht es in seiner Freigabestellung möglich, das Schild bei einer senkrechten Unterlage direkt von vorne einzusetzen. Bei Kraftfahrzeugen, in denen der Platz für das Nummernschild vertieft angebracht ist und also allseits von einer Erhebung umgeben ist, kann die Vorrichtung nach der Erfindung immer noch verwendet werden.

Weiterhin ist eine Verschlußleiste aus Kunststoff für Autoschilderbefestigungen an Kraftfahrzeugen bekannt (DE-U1-91 11 675). Hierzu muß die Halterung für das Schild einen seitlichen Flansch mit einer Öffnung und einer Nut aufweisen, damit eine getrennte Verschlußleiste an der Halterung angebracht werden kann. Das Lösen dieser Leiste von der Halterung ist bei an dem Kraftfahrzeug angebrachter Halterung mit Hilfe eines Spezialwerkzeugs von der Seite der Leiste möglich. Falls das Kraftfahrzeug eine vertiefte Unterbringungsmöglichkeit für das Schild aufweist, ist eine Lösung nicht mehr möglich.

Bei einem weiteren Kennzeichen-Halter (DE-A1-38 21 762) sind die beiden getrennten Teile der Halterung durch ein Scharnier miteinander verbunden. Im geschlossenen Zustand greifen Rastnasen hinter Klemmvorsprünge. Bei befestigter geschlossener Haltung besteht keine Möglichkeit, an die Rastnasen heranzukommen.

Bei einer weiteren bekannten Vorrichtung zur Befestigung einer Tafel an einer Unterlage (DE-U1-89 10 590) erfolgt die Verriegelung der zweiteiligen Halterung mit Hilfe von Rastnasen. Wenn die verriegelte Halterung nicht am Kraftfahrzeug befestigt ist, kann sie von der Unterseite der Halterung mit Hilfe eines Spezialwerkzeugs wieder geöffnet werden. Bei an dem Kraftfahrzeug befestigte Halterung ist jedoch kein Zugriff auf die Rastnasen mehr möglich.

Die Erfindung schlägt vor, daß das Rahmenelement in seiner Sperrstellung einen geschlossenen Rahmen bildet. Das Schild ist also längs seines gesamten Randes im Randbereich abgedeckt und festgehalten.

Es ist möglich, daß das Rahmenelement ein von der Unterlage getrenntes Element ist. Es kann dann von vorne her eingesetzt und verriegelt werden. Besonders günstig ist es jedoch, wenn in Weiterbildung der Erfindung vorgesehen ist, daß das Rahmenelement im Bereich einer Seitenkante der Unterlage an dieser schwenkbar angelenkt ist. Die Freigabestellung besteht in diesem Fall darin, daß das Rahmenelement aufgeschwenkt wird und so den Zugang freigibt. Nach eingesetztem Nummernschild läßt sich das Rahmenelement dann auf die Unterlage verschwenken und dort verriegeln.

Erfindungsgemäß kann vorgesehen sein, daß zwei Rahmenelemente vorgesehen sind, von denen jedes dann jeweils nur für einen Teil des Umfangs des Schildes bestimmt ist. Beispielsweise ist es möglich, einen rechteckigen Rahmen aus zwei U-förmigen Rahmenelementen zusammenzusetzen. In geschlossenem Zustand können auch diese getrennten Rahmenelemente einen geschlossenen Rahmen bilden.

Insbesondere kann vorgesehen sein, daß die beiden Rahmenelemente an einander gegenüberliegenden Seitenkanten der Unterlage angelenkt sind.

Die Verriegelungseinrichtung kann so ausgebildet sein, daß bei mehreren Rahmenelementen ein Rahmenelement mit der Unterlage verriegelbar ist, während das zweite Rahmenelement mit dem ersten Rahmenelement verriegelbar ist.

Die Erfindung schlägt vor, daß die Verriegelungseinrichtung dann, wenn die plattenartige Unterlage noch nicht am Kraftfahrzeug befestigt ist, von Hand lösbar ist, d.h. Zu ohne zu hilfenahme eines Werkzeugs. Dies macht es möglich, die in der Fabrik hergestellte Vorrichtung nach ihrer Herstellung zusammenzusetzen, so daß sie weniger Platz benötigt und einen stabileren Zustand einnimmt. Vor Anbringung an dem Kraftfahrzeug kann der Monteur die Halterung leicht und einfach in ihre Freigabestellung bringen.

In Weiterbildung kann vorgesehen sein, daß die Verriegelungseinrichtung dann, wenn die plattenartige Unterlage am Kraftfahrzeug festgeschraubt ist, nur noch mit Hilfe eines Werkzeugs, insbesondere eines Spezialwerkzeugs, gelöst werden kann. Damit kann einem Mißbrauch vorgebeugt werden. Eine besonders einfache Möglichkeit, diese Art der Verriegelungseinrichtungen zu realisieren, besteht darin, daß die Verriegelungseinrichtung von der Unterseite der Unterlage her leicht zugänglich ist. Diese Unterseite ist bei Befestigung am Kraftfahrzeug nicht mehr zugänglich. Von der gegenüberliegenden Vorderseite kann dann mit Hilfe eines Spezialwerkzeugs die Entriegelung vorgenommen werden. Dies kann beispielsweise dadurch geschehen, daß mehrere Zungen durch kleine Öffnungen gleichzeitig gesteckt werden müssen.

Die Erfindung schlägt vor, daß die Vorrichtung insgesamt einstückig aus Kunststoff gespritzt wird, wobei die Realisierung der Schwenkverbindung zwischen den Rahmenelementen und der Unterlage durch Filmscharniere geschehen kann.

Weitere Merkmale, Einzelheiten und Vorzüge ergeben sich aus den Ansprüchen, deren Wortlaut durch Bezugnahme zum Inhalt der Beschreibung gemacht wird, der folgenden Beschreibung einer bevorzugten Ausführungsform der Erfindung sowie anhand der Zeichnung. Hierbei zeigen:
- Fig. 1: eine geteilte Stirnansicht einer Vorrichtung, die in der linken Hälfte geöffnet ist;
- Fig. 2: in vergrößertem Maßstab einen Schnitt längs Linie II-II durch den Randbereich der Vorrichtung;
- Fig. 3: in vergrößertem Maßstab einen Schnitt längs Linie III-III in Fig. 1;
- Fig. 4: einen der Fig. 3 entsprechenden Schnitt längs Linie IV-IV;
- Fig. 5: eine Aufsicht auf den der Fig. 3 und 4 entsprechenden Teil des Randes der Vorrichtung bei geöffnetem Rahmen;
- Fig. 6: eine Stirnansicht des Bereichs der Fig. 5 von unten in Fig. 5;
- Fig. 7: eine Stirnseitenansicht der Halterung in geschlossenem Zustand.

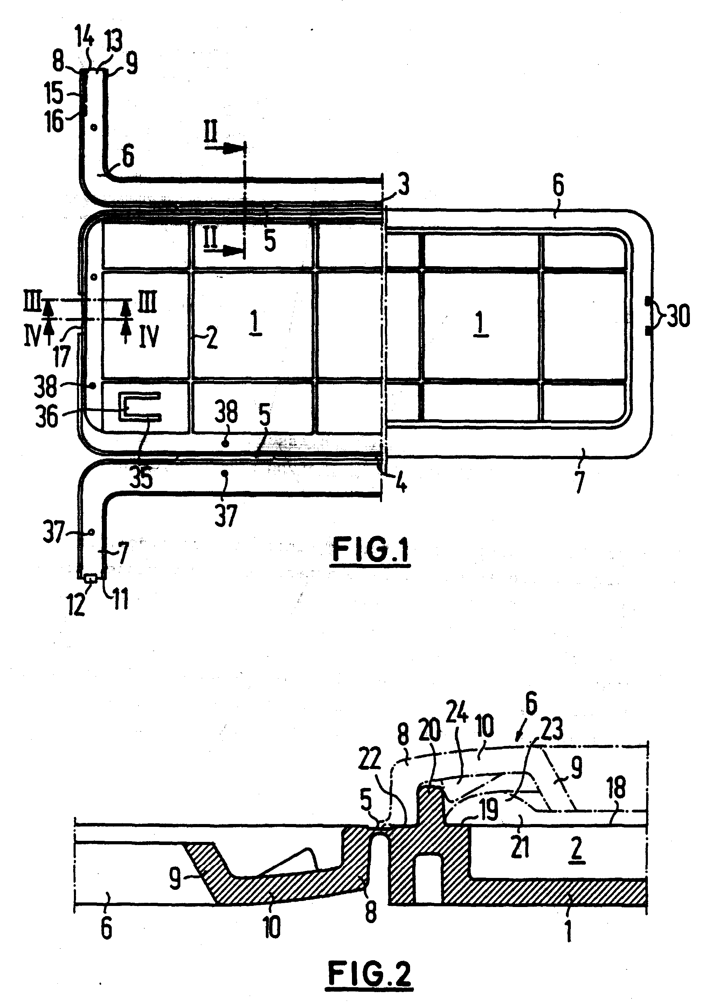

Fig. 1 zeigt in der linken Hälfte eine Vorderansicht einer Vorrichtung nach der Erfindung in geöffnetem Zustand, also der Stellung, in der das Nummernschild in die Vorrichtung eingesetzt werden kann, während die rechte Hälfte der Fig. 1 die Frontansicht der Vorrichtung in geschlossenem Zustand, jedoch ohne das Nummernschild zeigt.

Die Vorrichtung enthält eine plattenförmige Unterlage 1, die etwa die Form eines Nummernschildes für ein Kraftfahrzeug aufweist. Die Unterlage ist allseits etwas größer. Sie weist langgestreckte rechteckige Form mit abgerundeten Ecken auf. Die Unterlage enthält einige Verstärkungsstege 2, die eine Verstärkung der Unterlage bilden.

Im Bereich der beiden Längskanten 3, 4 ist an der Unterlage an deren Randbereich mit Hilfe von Filmscharnieren 5, von denen die Fig. 1 jeweils zwei zeigt, je ein Rahmenelement 6, 7 schwenkbar angelenkt. Die Rahmenelemente weisen eine bestimmte Breite auf und bilden in zusammengesetztem Zustand, siehe rechts in Fig. 1, einen geschlossenen rechteckigen Rahmen.

Der Querschnitt jedes Rahmenelementes ist etwa U-förmig und wird von zwei Schenkeln 8, 9 gebildet, die einstückig durch einen Steg 10 miteinander verbunden sind.

Die beiden freien Enden 11 des einen Rahmenelementes sind an ihrer Innenseite mit einer Lasche 12 versehen, die in zusammengeklapptem Zustand unter dem Steg 10 des freien Endes 13 des jeweils anderen Rahmenelementes 6 zu liegen kommen.

Im Bereich des freien Endes 13 weist das eine Rahmenelement 6 an der Innenseite seines äußeren Schenkels 8 drei nasenartige Vorsprünge 14, 15, 16 auf, die in einem Einschnitt 17 im Außenrand der plattenartigen Unterlage 1 hinter entsprechend geformte Gegenvorsprünge greifen. Diese Vorsprünge bilden mit der Unterlage 1 eine Verriegelung für das eine Rahmenelement 6.

Fig. 2 zeigt einen vergrößerten Schnitt längs Linie II-II in Fig. 1. In ausgezogenen Strichen ist der Randbereich der Vorrichtung in geöffnetem Zustand dargestellt, wie dies der linken Hälfte der Fig. 1 entspricht. Strichpunktiert ist das Rahmenelement 6 auch in geschlossenem Zustand dargestellt.

Die plattenartige Unterlage weist einen mit der Oberseite 18 der Versteifungsstege 2 bündigen Randbereich 19 auf, der allseits durch einen umlaufenden erhöhten Flansch 20 begrenzt wird. In dem Raum innerhalb des Flansches 20 wird durch den Randbereich 19 und die Oberseite 18 der Verstärkungsstege 2 eine Auflagefläche für das strichpunktiert angedeutete Nummernschild 21 geschaffen.

Außerhalb des Flansches 20 ist ein auf gleicher Höhe liegender Randbereich 22 gebildet, dessen Breite der Dicke des äußeren Schenkels 8 des Rahmenteils 6 entspricht. In geöffneter der Stellung Rahmenelemente wird in den Raum innerhalb des Flansches 20 das Nummernschild 21 eingelegt und anschließend zunächst das mit der Lasche 12 versehene Rahmenelement 7 zugeklappt, bis es auf dem Randbereich 22 der Unterlage 1 liegt. Anschließend wird das obere Rahmenelement 6 verschwenkt und zugeklappt, bis es mit seinen Vorsprüngen 14 bis 16 an der Unterlage verriegelt ist. In diesem Zustand ist das Nummernschild 21 festgelegt. Sein Randwulst 23 liegt zwischen den Schenkeln 8 und 9 des Rahmenelementes 6 bzw. 7. Zusätzlich kann auf der Innenseite des Stegs 13 noch eine Nase 24 angeformt sein, die zu einer nochmals verbesserten Festlegung des Nummernschildes 21 führt. Diese Nase kann auch als durchlaufendes Profil ausgebildet sein.

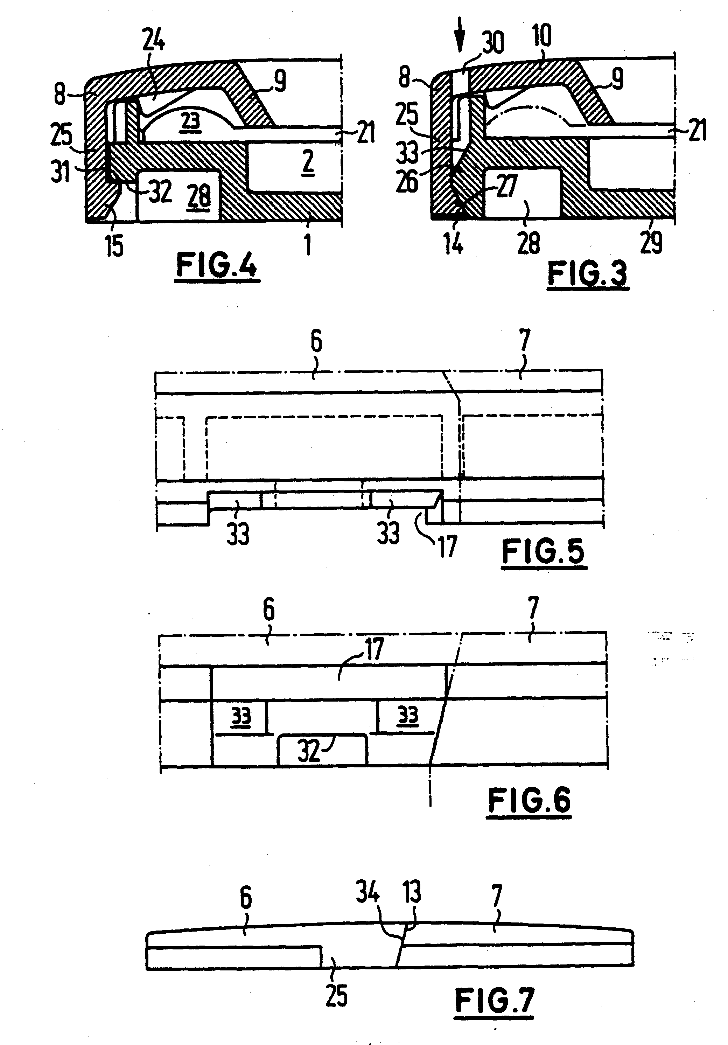

Die Seitenansicht der geschlossenen Vorrichtung ist in Fig. 7 dargestellt, auf die zunächst verwiesen wird. An dem Rahmenelement 6 ist im Bereich von dessen freiem Ende 13 ein in den Einschnitt 17 der Unterlage 1 eingreifender Vorsprung 25 ausgebildet. Dieser Vorsprung 25 ist an verschiedenen Stellen in Fig. 3 und Fig. 4 im Schnitt zu sehen. Fig. 3 zeigt zunächst den Schnitt in Höhe des ersten bzw. dritten Vorsprungs 14, während Fig. 4 einen Schnitt durch den mittleren Vorsprung 15 zeigt.

Der Außenrand 26 der Unterlage 1 weist an der Stelle der Fig. 3 einen Vorsprung auf, der oben und unten von einer Schrägfläche gebildet wird. Das Ende des Vorsprungs 25 ist an der Innenseite mit einer entsprechend geformten Keilfläche 27 versehen.

Hinter dem Außenrand 26 ist ein Hohlraum 28 gebildet, der auf der Rückseite 29 der Unterlage 1 ausmündet.

In geradliniger Verlängerung oberhalb der oberen Keilfläche ist in dem Stegteil 10 des Rahmenelements eine schmale Öffnung 30 vorgesehen. Schiebt man einen Stift durch die Öffnung 30 gegen die obere Keilfläche 31, so verschwenkt ein Weiterschieben den Vorsprung 25 nach links in Fig. 3, bis seine untere Keilfläche 27 außer Eingriff mit der Gegenfläche des Außenrandes 26 gelangt. Da mit Abstand zu dem Vorsprung 14 mit seiner Keilfläche 27 ein zweiter derartiger Vorsprung 16 angeordnet ist, reicht das Einschieben eines Stiftes in die Öffnung 30 allein nicht aus, den Randbereich 25 außer Eingriff mit dem Randbereich 26 zu bringen.

Mittig zwischen den beiden identisch ausgebildeten Vorsprüngen 14 und 16 ist der Vorsprung 15 angeordnet, siehe Fig. 4. Der Vorsprung 15 weist Widerhakenform mit einer senkrecht zur Außenseite verlaufenden Fläche 31 auf, die hinter eine ebenfalls senkrecht verlaufende Fläche 32 greift. Der Außenrand 26 ist in diesem Bereich unterbrochen, so daß die Rückseite des Vorsprungs 25 und die beiden erwähnten Flächen 31, 32 von dem Hohlraum 28 her zugänglich sind.

Nur dann, wenn man durch die öffnungen 30 bei beiden Vorsprüngen 14, 16 gleichzeitig einen Stift schiebt, wird der Ansatz 25 so weit nach außen verformt, daß auch der widerhakenartige Vorsprung 15 außer Eingriff mit der Fläche 32 gelangt und das Rahmenelement geöffnet werden kann. Man braucht also zu dieser Betätigung ein Spezialwerkzeug, das zwei dem Abstand der Öffnungen 30 entsprechende Stifte aufweist.

Solange aber noch der Zugang zu dem Hohlraum 28 möglich ist, die Unterlage 1 also noch nirgends festgeschraubt ist, kann man den Vorsprung 15 von Hand nach außen drücken.

Beim Überführen von der Freigabestellung in die Sperrstellung gleiten die Vorsprünge 14, 16 an der oberen Keilfläche 33 ab, so daß die Verriegelung automatisch geschieht.

Fig. 5 zeigt die Aufsicht auf den Randbereich der Unterlage 1 im Bereich des Einschnitts 17. Beidseits sind die Schrägflächen 33 für die Vorsprünge 14 und 16 zu sehen, während in der Mitte der Bereich mit der geraden Fläche 32 an der Unterseite zu sehen ist. Strichpunktiert ist in Fig. 5 der Verlauf beider Rahmenelemente 6, 7 eingezeichnet.

Fig. 6 zeigt den Einschnitt 17 von der Seite. Wiederum sind strichpunktiert die beiden Rahmenelemente 6, 7 eingezeichnet.

Die Trennfläche 34 zwischen dem Rahmenelement 6 und dem Rahmenelement 7 verläuft zusätzlich noch schräg, so daß hier ebenfalls eine Verriegelung zwischen den beiden Rahmenelementen gegeben ist.

In Fig. 1 ist im linken unteren Bereich der Unterlage 1 durch einen Schlitz 35 abgegrenzt ein federndes Element 36 dargestellt. Dieses beim Herstellen der Halterung aus Kunststoff einstückig mit hergestellte Federelement ragt etwas nach oben und liegt an der Unterseite des Nummernschildes 21 mit einer gewissen Beaufschlagung an. Es können auch mehr derartige Federelemente vorhanden sein. Durch die Beaufschlagung kann dafür gesorgt werden, daß beim Einsetzen des erwähnten Spezialwerkzeugs in die beiden Öffnungen 30 nach Verschwenken des Ansatzes 25 nach außen, sobald der Vorsprung 15 außer Eingriff gelangt, die Federwirkung dann die beiden Rahmenelemente von allein öffnet.

Zur exakten Positionierung können an der Innenseite der Rahmenelemente 6, 7 einzelne zapfenartige Vorsprünge 37 ausgebildet sein, die in entsprechende Vertiefungen 38 in der Unterlage 1 eingreifen. Die umgekehrte Ausbildung ist natürlich ebenfalls möglich.

Die Vorrichtung wurde bislang zur Halterung von Schildern, insbesondere Nummernschilder, an Kraftfahrzeugen beschrieben. Selbstverständlich ist es auch möglich, andere Schilder, Typenschilder usw. an anderen Gegenständen zu haltern, beispielsweise zur Kennzeichnung reservierter Parkplätze oder auch zur Kennzeichnung von Maschinen und Gebäuden. Die Befestigung der Unterlage geschieht durch Löcher in der Unterlage hindurch, die bei eingelegtem Schild dann durch das Schild selbst abgedeckt sind. Der Einfachheit halber wird immer der Begriff Schild verwendet.

## Patentansprüche

1. Vorrichtung zur Halterung eines Schilds (21) o.dgl. an einem Gegenstand, insbesondere einem Kraftfahrzeug, mit
1.1 einer plattenförmigen Unterlage (1), die
1.1.1 an dem Kraftfahrzeug befestigbar ist und
1.1.2 einen Raum für das zu halternde Schild (21) aufweist, das
1.1.3 den Zugang zur Befestigung der Halterung abdeckt,
1.2 mindestens einem Rahmenelement (6, 7), das
1.2.1 eine das Einsetzen und/oder Entnehmen des Schilds (21) ermöglichende Freigabestellung und
1.2.2 im Zusammenwirken mit der Unterlage (1) eine das Einsetzen und/oder Entnehmen des Schilds (21) verhindernde Sperrstellung aufweist, sowie mit
1.3 einer Verriegelungseinrichtung zur Verriegelung des mindestens einen Rahmenelements (6, 7) in dessen Sperrstellung, die
1.3.1 bei an dem Gegenstand befestiger Halterung nur mit Hilfe eines Werkzeugs entriegelbar ist, dadurch gekennzeichnet, daß die Entriegelung nur von der der Unterseite der Unterlage (1) gegenüberliegenden Vorderseite her möglich ist.

2. Vorrichtung nach Anspruch 1, bei der das Rahmenelement (6, 7) in seiner Sperrstellung den Randbereich des Schilds (21) abdeckt.

3. Vorrichtung nach Anspruch 1 oder 2, bei der das Rahmenelement (6,7) in seiner Sperrstellung einen geschlossenen Rahmen bildet.

4. Vorrichtung nach einem der vorhergehenden Ansprüche, bei der das Rahmenelement (6, 7) im Bereich einer Seitenkante der Unterlage (1) an dieser schwenkbar angelenkt ist.

5. Vorrichtung nach einem der vorhergehenden Ansprüche mit zwei Rahmenelementen (6, 7).

6. Vorrichtung nach Anspruch 5, bei der die beiden Rahmenelemente (6, 7) an einander gegenüberliegenden Seitenkanten der Unterlage (1) angelenkt sind.

7. Vorrichtung nach einem der vorhergehenden Ansprüche, bei der die Verriegelungseinrichtung bei nicht an dem Gegenstand befestigter Halterung ohne Werkzeug entriegelbar ist.

8. Vorrichtung nach einem der vorhergehenden Ansprüche, einstückig aus Kunststoff gespritzt.

## Claims

1. Device for fastening a plate (21) or the like to an object, particularly a motor vehicle, having
1.1 a plate-shaped substrate (1), which
1.1.1 is fixable to a vehicle and
1.1.2 has a space for the plate (21) to be fastened, which
1.1.3 cover the access for securing the fastening,
1.2 at least one frame element (6, 7), which
1.2.1 has a release position permitting the insertion and/or removal of the plate (21) and
1.2.2 in conjunction with the substrate (1), a locked position preventing the insertion and/or removal of the plate (21), as well as having
1.3 a locking device for locking the at least one frame element (6, 7) in its locked position, which
1.3.1 with the fastening fixed to the object can be unlocked only with the aid of a tool,
characterized in that unlocking is only possible from the front side opposite to the bottom of the substrate (1).

2. Device according to claim 1, in which the frame element (6, 7) covers the marginal area of the plate (21) in its locked position.

3. Device according to claim 1 or 2, in which the frame element (6, 7) forms a closed frame in its locked position.

4. Device according to one of the preceding claims, in which the frame element (6, 7) is swivellably articulated to the substrate (1) in the vicinity of a lateral edge of the latter.

5. Device according to one of the preceding claims, with two frame elements (6, 7).

6. Device according to claim 5, in which the two frame elements (6, 7) are articulated to opposite lateral edges of the substrate (1).

7. Device according to one of the preceding claims, in which the locking device is unlockable without a tool when the fastening is not fixed to the object.

8. Device according to one of the preceding claims, injection moulded in one piece from plastic.

## Revendications

1. Dispositif de fixation d'une plaque (21) ou l'équivalent à un objet, en particulier un véhicule automobile, comprenant :
1.1 un support en forme de plaque (1), qui
1.1.1 peut être fixé au véhicule et
1.1.2 présente un espace pour la plaque (21) à fixer, qui
1.1.3 masque l'accès permettant le montage du dispositif de fixation,
1.2 au moins un élément de cadre (6, 7) qui
1.2.1 présente une position de libération qui permet la mise en place et/ou l'enlèvement de la plaque (21) et
1.2.2 en combinaison avec le support (1), une position de blocage s'opposant au placement et/ou à l'enlèvement de la plaque (21), et
1.3 un dispositif de verrouillage pour condamner au moins l'un des éléments de cadre (6, 7) en position de blocage, qui
1.3.1 lorsque le dispositif de fixation est monté sur l'objet, ne peut être débloquée qu'à l'aide d'un outil,
caractérisé en ce que le déverrouillage n'est possible que depuis la face avant se trouvant en regard de la face inférieure du support (1).

2. Dispositif selon la revendication 1, dans lequel l'élément de cadre (6, 7) en position de blocage masque la zone de bordure de la plaque (21).

3. Dispositif selon la revendication 1 ou 2, dans lequel l'élément de cadre (6, 7) en position de blocage forme un cadre fermé.

4. Dispositif selon l'une des revendications qui précédent, dans lequel l'élément de cadre (6, 7) est articulé dans la zone d'une arête latérale du support (1), pour pouvoir pivoter sur ce dernier.

5. Dispositif selon l'une des revendications qui précèdent, comprenant deux éléments de cadre (6, 7).

6. Dispositif selon la revendication 5, dans lequel les deux éléments de cadre (6, 7) sont articulés à des arêtes latérales du support (1) mutuellement opposées.

7. Dispositif selon l'une des revendications qui précédent, dans lequel le dispositif de verrouillage peut être débloqué sans outil si le dispositif de fixation n'est pas monté sur l'objet.

8. Dispositif selon l'une des revendications qui précédent, moulé d'une seule pièce par injection de plastique.
